# EUROPÄISCHE PATENTSCHRIFT

(11) **EP 0 766 619 B1**
(45) Veröffentlichungstag und Bekanntmachung des Hinweises auf die Patenterteilung: **22.09.1999**
(21) Anmeldenummer: 95904416.5
(22) Anmeldetag: 02.12.1994
(51) Int. Cl.: B29C 70/52, B29B 15/10

(54) **VERFAHREN ZUR HERSTELLUNG EINES PRODUKTES AUS EINEM FASERVERSTÄRKTEN VERBUNDWERKSTOFF**
PROCESS FOR MANUFACTURING PRODUCTS MADE OF A FIBRE-REINFORCED COMPOSITE MATERIAL
PROCEDE DE FABRICATION DE PRODUITS EN MATERIAU COMPOSITE RENFORCE PAR DES FIBRES

(30) Priorität: 06.12.1993 DE 4341521
(43) Veröffentlichungstag der Anmeldung: 09.04.1997
(73) Patentinhaber: MILLIKEN EUROPE N.V., B-9000 Gent (BE)
(72) Erfinder: VAN HOEY, Marc, B-9050 Gentbrugge (BE); WAGNER, Dieter, D-79805 Eggingen (DE); DE MEYER, Willy, B-9031 Drongen (BE)
(74) Vertreter: Beyer, Andreas, Dr.
(86) Internationale Anmeldenummer: EP9404022
(87) Internationale Veröffentlichungsnummer: WO9515844

(56) Entgegenhaltungen:
- EP-A- 0 133 893
- EP-A- 0 402 309
- DE-A- 2 165 470
- GB-A- 900 769
- GB-A- 2 259 044

## Beschreibung

Die Erfindung betrifft ein Verfahren zur Herstellung hochbelastbarer Rohre oder Schläuche aus einem faserverstärkten Verbundwerkstoff.

Zur Herstellung von Produkten aus faserverstärkten Verbundwerkstoffen sind verschiedene Verfahren bekannt. Beim Handlaminierverfahren wird das Endprodukt durch manuelles Auftragen von Harz und Glasfasermatten bzw. -geweben auf eine Holz-, Kunststoff- oder Metallform hergestellt. Dieses Verfahren eignet sich wegen des hohen manuellen Arbeitsanteils nur für Einzelteile oder für kleine Stückzahlen. Bei im Handlaminierverfahren hergestellten Fertigteilen ist nur die der Form zugewandte Seite glatt.

Rotationssymmetrische Formteile, wie beispielsweise Rohre und Behälter, werden häufig im Wickelverfahren hergestellt. Dabei werden Textilglasmatten, Gewebe oder Rovings und Harz mittels einer Wickelmaschine auf einen Metalldorn gewickelt. Auch bei diesem Verfahren sind nur die Innenflächen der gewickelten Teile optimal glatt. Das Wickelverfahren ist ebenfalls arbeitsintensiv und führt daher zu hohen Herstellungskosten der Fertigteile.

Für große Serien ist das Heißpreßverfahren von Harzmatten (SMC) oder von Preßmassen (BMC) bekannt. Dabei werden eingedickte Harz-Glas-Füllstoffgemische in Zuschnitten in beheizte, oberflächenvergütete Stahlformen gelegt und bei erhöhter Temperatur (etwa 120 bis 150° c) unter Druck ausgehärtet. Das Heißpreßverfahren erfordert aufgrund seines diskontinuierlichen Ablaufs einen relativ hohen Arbeitsaufwand.

Für die Herstellung großflächiger Teile aus faserverstärktem Verbundwerkstoff ist das Injektionsverfahren bekannt. Bei diesem wird das exakt zugeschnittene Verstärkungsmaterial in eine Form eingelegt, deren Oberseite durch eine Gegenform abgedeckt wird. Die das Verstärkungsmaterial enthaltende Form wird dann evakuiert, woraufhin Harz zumeist an der tiefsten Stelle der Form zugeführt und durch das Laminat bis zum Rand angesaugt wird. Auch dieses Verfahren ist diskontinuierlich und erfordert einen relativ hohen Arbeitsaufwand.

Ein zur Herstellung von faserverstärkten Kunststoffen geeignetes, kontinuierliches Verfahren ist die Pultrusion. Bei der Pultrusion wird das mit Harz getränkte Verstärkungsmaterial kontinuierlich durch eine beheizte Form mit dem gewünschten Profil gezogen, wobei das Produkt seine endgültige Form erhält und gleichzeitig aushärtet. Diesem Verfahren sind jedoch eine ganze Reihe von Grenzen gesetzt: Das Matrixmaterial, meist ein Harz, muß in flüssiger Form vorliegen, damit das Verstärkungsmaterial mit ihm getränkt werden kann. Bei der Auswahl des Matrixmaterials ist man deshalb auf bestimmte, verflüssigbare Harze beschränkt. Üblicherweise werden die als Matrixmaterial eingesetzten Harze mit einem Lösungsmittel verflüssigt, das beim Aushärten freigesetzt wird und für die Umwelt schädlich ist. Desweiteren führt die durch das Tränken erfolgende Auftragung des Matrixmaterials zu keiner homogenen Verteilung auf dem Verstärkungsmaterial, weshalb die Eigenschaften des Endproduktes schwankend sind. Die Geschwindigkeit des Pultrusionsvorgangs wird durch die Fähigkeit des Matrixmaterials, in das Verstärkungsmaterial einzudringen, und durch die Viskosität des Matrixmaterials beschränkt. Darüber hinaus wird die Pultrusionsgeschwindigkeit durch die Kräfte begrenzt, die während des Erhitzens und Formens auf das Matrixmaterial ausgeübt werden können, da zu hohe Zugkräfte die Struktur des Verstärkungsmaterials und des Matrixmaterials zerstören.

Bei allen vorgenannten Verfahren wird als Matrixmaterial ein thermisch aushärtbarer Stoff, zumeist ein Kunstharz, eingesetzt.

Aus der EP-A-0 133 893 ist ein Verfahren zur Herstellung von Teilen aus faserverstärktem Verbundwerkstoff bekannt. Dieses Verfahren verwendet als Ausgangsmaterial textile Gebilde, die aus Gemischen von mindestens zwei Fasertypen aufgebaut sind, von denen mindestens eine Fasertype unter Heißpreßbedingungen schmelzbar ist und somit als Thermoplast fungiert, während die andere Fasertype unter den Heißpreßbedingungen als solche erhalten bleibt. Mit diesem Verfahren lassen sich unidirektional faserverstärkte Thermoplastprofile herstellen, beispielsweise Rohre, die hervorragende Zugfestigkeiten in Längsrichtung besitzen. Die Innendruckfestigkeit in Schläuchen und Rohren wird jedoch hauptsächlich von der Festigkeit in Querrichtung bestimmt.

Zur Verarbeitung glasfaserverstärkter Thermoplaste ist das Spritzgußverfahren bekannt. Ausgangsmaterial ist dabei granulatförmiges Material, in dem kurze Glasfasern bereits enthalten sind. Das Granulat wird aufgeschmolzen und mittels eines Extruders in die gewünschte Spritzform gedrückt. Für Verbundwerkstoffe, bei denen das Verstärkungsmaterial in Form eines Gewebes, Gestrickes, Geleges, Geflechtes, Gewirkes, Vlieses oder ähnlichem vorliegt, ist dieses Verfahren nicht geeignet.

Der Erfindung liegt die Aufgabe zugrunde, ein Verfahren zur Herstellung hochbelastbarer Rohre oder Schläuche aus einem faserverstärkten Verbundwerkstoff anzugeben, das schneller und damit wirtschaftlicher als bisherige Verfahren durchführbar ist, das schärferen Umweltschutzauflagen gerecht wird, und das es ermöglicht, eine breite Palette von Produkten herzustellen.

Diese Aufgabe ist erfindungsgemäß mit einem Verfahren gelöst, das die Merkmale des Anspruchs 1 aufweist. Vorteilhafte Ausgestaltungen und Weiterbildungen des erfindungsgemäßen Verfahrens sind in den Unteransprüchen gekennzeichnet.

Im Gegensatz zu den meisten bekannten Verfahren, bei denen das Verstärkungsmaterial in Form eines Gewebes, Gestrickes, Geleges, Geflechtes, Gewirkes, Vlieses oder ähnlichem vorliegt, wird beim erfindungsgemäßen Verfahren als Matrixmaterial kein thermohärtbares Material, sondern ein thermoplastisches Material eingesetzt. Die zum Verflüssigen des Matrixmaterials erforderlichen Lösungsmittel fallen daher beim erfindungsgemäßen Verfahren ersatzlos weg. Statt dessen wird das Matrixmaterial, das beispielsweise ein thermoplastischer Polymerwerkstoff oder ein anderes Material sein kann, das oberhalb einer bestimmten Temperatur schmilzt, in fester Form im Gewebe, Gestrick, Gelege, Geflecht, Gewirke oder Vlies des Verstärkungsmaterials bereitgestellt. Dies kann z. B. dadurch erreicht werden, daß das Matrixmaterial in Form von Fasern, Fäden oder Garnen zusammen mit Fasern, Fäden oder Garnen aus Verstärkungsmaterial verwebt, verwirkt, verflochten oder zusammen verstrickt wird. Ebenso kann zur Herstellung des Gewebes, Gestrickes, Geleges, Geflechtes oder Gewirkes ein Garn verwendet werden, das sowohl` das Verstärkungsmaterial als auch das Matrixmaterial enthält. Besonders vorteilhaft kann ein Garn eingesetzt werden, das einen Kern aus dem Verstärkungsmaterial aufweist, welcher mit dem Matrixmaterial umwickelt oder umsponnen ist. Wichtig ist lediglich, daß die Schmelztemperatur des Verstärkungsmaterials über der Schmelztemperatur des Matrixmaterials liegt. Erfindungsgemäß wird also das Verstärkungsmaterial zusammen mit dem Matrixmaterial in einer Form bereitgestellt, die auch unter dem Oberbegriff der "textile fabrics" bekannt ist.

Das solchermaßen bereitgestellte Gewebe, Gestrick, Gelege, Geflecht, Gewirke oder Vlies kann ohne weitere Vorbehandlung durch Pultrusion weiterverarbeitet werden, wenn die Temperatur im Pultrusionsschritt oberhalb der Schmelztemperatur des Matrixmaterials und unterhalb der Schmelz- bzw. Zersetzungstemperatur des Verstärkungsmaterials liegt. Bevorzugt liegt die Temperatur im Pultrusionsschritt deutlich unterhalb der Schmelz- bzw. Zersetzungstemperatur des Verstärkungsmaterials.

Nach dem Pultrusionsschritt wird das in die gewünschte Form gebrachte Produkt gekühlt, um seine Form zu fixieren. Das fertige Produkt weist eine geschlossene Matrix auf, in der das Verstärkungsmaterial enthalten ist. Vor dem Kühlen des durch die Pultrusion erhaltenen Produkts kann dessen Form noch beeinflußt werden. Werden etwa faserverstärkte Profile pultrudiert, können diese beispielsweise vor dem Kühlen noch in einer gewünschten Weise abgeknickt und durch anschließendes Kühlen fixiert werden.

Zur Herstellung hochbelastbarer Rohre oder Schläuche wird auf die Außenfläche eines erfindungsgemäß pultrudierten Rohres oder Schlauches eine weitere Schicht aus Verstärkungsmaterial durch Umflechten, Umstricken oder Umwickeln aufgebracht, die anschließend in einem Extrusionsschritt mit einer Schicht aus thermoplastischem Material überzogen wird. Dabei kann die weitere Schicht aus Verstärkungsmaterial vor dem Extrusionsschritt in geeigneter Weise vorbehandelt werden, beispielsweise durch Anfeuchten oder Eintauchen in eine Flüssigkeit, um die Haftung der Schichten untereinander zu verbessern.

Das erfindungsgemäße Verfahren hat eine Reihe von Vorteilen:

Als Matrixmaterial kann nahezu jedes Material eingesetzt werden, dessen Schmelztemperatur unterhalb der Schmelz- bzw. Zersetzungstemperatur des verwendeten Verstärkungsmaterials liegt. Das Matrixmaterial kann dabei, ebenso wie das Verstärkungsmaterial, aus mehreren Komponenten bestehen. Aufgrund der gemeinsamen Bereitstellung des Matrixmaterials und des Verstärkungsmaterials in der erfindungsgemäßen Form wird eine gleichbleibende und homogene Verteilung des Matrixmaterials im Endprodukt sichergestellt. Da das Tränken des Verstärkungsmaterials mit Matrixmaterial ersatzlos wegfällt, begrenzt allein die Wärmeaufnahmekapazität des bereitgestellten Gewebes, Gestrickes, Geleges, Geflechtes, Gewirkes oder Vlieses die Pultrusionsgeschwindigkeit, so daß die bisher übliche Pultrusionsgeschwindigkeit von etwa 0,5 bis 1,5 m/min auf etwa den drei- bis fünffachen Wert gesteigert werden kann.

Das erfindungsgemäße Verfahren kann in vorteilhafter Weise dadurch ergänzt werden, daß das pultrudierte Produkt in einem Extrusionsschritt ein- und/oder beidseitig mit einer zusätzlichen Schicht aus einem gewünschten Material versehen wird. Bevorzugt ist dieses Material thermoplastisch. Auf diese Weise lassen sich beispielsweise Schläuche oder Rohre herstellen, die innen und/oder außen eine zusätzliche Schicht aus thermoplastischem Material aufweisen.

Auch kann auf das pultrudierte Produkt in einem Extrusionsschritt eine Schicht aus einem Füllmaterial aufgebracht werden, z. B. eine Sandschicht, die sodann in einem weiteren Extrusionsschritt mit einer Schicht aus thermoplastischem Material überzogen wird. Auf diese Art können beispielsweise gewebeverstärkte Kühlerschläuche für Kraftfahrzeuge äußerst wirtschaftlich hergestellt werden, wobei die Außenfläche der so hergestellten Schläuche sehr glatt ist und damit hohen Anforderungen genügt. Ebenso kann sich an den ersten Pultrusionsschritt ein weiterer Pultrusionsschritt anschließen.

Die Auswahl an einsetzbaren Materialien ist nicht auf Polymerwerkstoffe beschränkt, sondern kann auch Metalle wie beispielsweise Blei oder Kupfer umfassen, die in Abhängigkeit der Schmelztemperatur der anderen im erfindungsgemäß bereitgestellten Gewebe, Gestrick, Gelege, Geflecht, Gewirke oder Vlies enthaltenen Komponente entweder als Verstärkungs- oder als Matrixmaterial eingesetzt werden können.

Im folgenden werden einige Beispiele von Produkten angegeben, die mit dem erfindungsgemäßen Verfahren in überlegener Weise hergestellt werden können.

### Beispiel 1: Wasserrohr für den mittleren Temperaturbereich

- Matrixmaterial:: PVC (Schmelztemperatur 50 bis 110° C)
- Verstärkungsmaterial:: Glas (Schmelztemperatur 825° C)

### Beispiel 2: Wasserrohr für den Niedrigtemperaturbereich

- Matrixmaterial:: Polypropylen (Schmelztemperatur 165° C)
- Verstärkungsmaterial:: Polyethylenterephthalat (Schmelztemperatur 256° C)

### Beispiel 3: Wasserrohr für mittlere Temperatur und hohen Druck

- Matrixmaterial:: Polyethylenterephthalat (Schmelztemperatur 256° C)
- Versthrkungsmaterial:: Aramid (Zersetzungstemperatur 500° C)

### Beispiel 4: Profil als Konstruktionselement

- Matrixmaterial:: Polyethylenterephthalat (Schmelztemperatur 256° C)
- Verstärkungsmaterial:: Glas (Schmelztemperatur 825° C)

### Beispiel 5: Material als Schutz vor Röntgenstrahlung

- Matrixmaterial:: Blei (Schmelztemperatur 327° C)
- Verstärkungsmaterial:: Glas (Schmelztemperatur 825° C)

### Beispiel 6: Schlauch mit verbesserter Platzfestigkeit

- Matrixmaterial:: Polyethylenterephthalat/Polyamid-66-Copolymer (Schmelzpunkt etwa 260° C)
- Verstärkungsmaterial:: Glas/Aramid (Schmelzpunkt 825° C bzw. 500° C)

### Beispiel 7: Kabel mit spezieller Ummantelung

Um ein Kabel wird zunächst ein erfindungsgemäß bereitgestelltes Gewebe, Gestrick, Gelege, Geflecht, Gewirke oder Vlies gewickelt oder gelegt, das anschließend zusammen mit dem Kabel pultrudiert wird. Auf diese Weise lassen sich elektrische Kabel sehr wirtschaftlich mit einer maßgeschneiderten Ummantelung versehen.

## Patentansprüche

1. Verfahren zur Herstellung hochbelastbarer Rohre oder Schläuche aus einem faserverstärkten Verbundwerkstoff, mit den Schritten:
- Bereitstellen eines Gewebes, Gestrickes, Geleges, Geflechtes, Gewirkes oder Vlieses aus einem Verstärkungsmaterial und einem Matrixmaterial, dessen Schmelztemperatur niedriger als die des Verstärkungsmaterial ist,
- Pultrudieren des Gewebes, Gestrickes, Geleges, Geflechtes, Gewirkes oder Vlieses durch eine dem gewünschten Endprodukt entsprechende Form bei einer Temperatur oberhalb der Schmelztemperatur des Matrixmaterials und unterhalb der Schmelz- bzw. Zersetzungstemperatur des Verstärkungsmaterials, und
- Kühlen des erhaltenen Rohres oder Schlauches,
gekennzeichnet durch die Schritte
- Aufbringen einer weiteren Schicht aus Verstärkungsmaterial auf die Außenfläche des Rohres oder Schlauches durch Umflechten, Umstricken oder Umwickeln, und
- Überziehen der zuvor aufgebrachten, weiteren Schicht aus Verstärkungsmaterial mit einer Schicht aus thermoplastischem Material mittels Extrusion.

2. Verfahren nach Anspruch 1,
dadurch gekennzeichnet, daß das pultrudierte Produkt in einem Extrusionsschritt ein- und/oder beidseitig mit einer Schicht aus thermoplastischem Material versehen wird.

3. Verfahren nach Anspruch 1,
dadurch gekennzeichnet, daß auf das pultrudierte Produkt in einem Extrusionsschritt eine Schicht aus Füllmaterial aufgebracht wird und sodann in einem weiteren Extrusionsschritt die Schicht aus Füllmaterial mit einer Schicht aus thermoplastischem Material überzogen wird.

4. Verfahren nach Anspruch 1,
dadurch gekennzeichnet, daß das bereitgestellte Gewebe, Gestricke, Gelege, Geflecht, Gewirke oder Vlies um ein Kabel gewickelt oder gelegt und dann mit dem Kabel pultrudiert wird.

5. Verfahren nach einem der vorhergehenden Ansprüche,
dadurch gekennzeichnet, daß das Verstärkungsmaterial und/oder das Matrixmaterial mehrere Komponenten aufweist.

6. Verfahren nach einem der Ansprüche 1 bis 4,
dadurch gekennzeichnet, daß das Verstärkungsmaterial Glas und das Matrixmaterial Polyvinylchlorid ist.

7. Verfahren nach einem der Ansprüche 1 bis 4,
dadurch gekennzeichnet, daß das Verstärkungsmaterial Polyethylenterephthalat und das Matrixmaterial Polypropylen ist.

8. Verfahren nach einem der Ansprüche 1 bis 4,
dadurch gekennzeichnet, daß das Verstärkungsmaterial Aramid und das Matrixmaterial Polyethylenterephthalat ist.

9. Verfahren nach einem der Ansprüche 1 bis 4,
dadurch gekennzeichnet, daß das Verstärkungsmaterial Glas und das Matrixmaterial Polyethylenterephthalat ist.

10. Verfahren nach einem der Ansprüche 1 bis 4,
dadurch gekennzeichnet, daß das Verstärkungsmaterial Glas und das Matrixmaterial Blei ist.

11. Verfahren nach einem der Ansprüche 1 bis 4,
dadurch gekennzeichnet, daß das Verstärkungsmaterial eine Mischung aus Glas und Aramid und das Matrixmaterial eine Mischung aus Polyethylenterephthalat und Polyamid-66-Copolymer ist.

12. Rohr oder Schlauch,
dadurch gekennzeichnet, daß es bzw. er durch ein Verfahren nach einem der vorhergehenden Ansprüche hergestellt worden ist.

## Claims

1. A method for producing heavy-duty tubes or hoses of a fiber-reinforced compound material with the steps of:
- providing a fabric, knit, nonwoven scrim, plait, hosiery, or nonwoven fabric of a reinforcing material and a matrix material, the melting temperature of which is lower than that of the reinforcing material,
- pultruding the fabric, knit, nonwoven scrim, plait, hosiery, or nonwoven fabric through a mold corresponding to the desired end product at a temperature above the melting temperature of the matrix material and below the melting or decomposition temperature, respectively, of the reinforcing material, and
- cooling the tube or hose obtained,
characterized by the steps of
- applying a further layer of reinforcing material to the outer surface of the tube or hose by plaiting, knitting, or wrapping, and
- covering the additional layer of reinforcing material, applied previously, with a layer of thermoplastic material by means of extrusion.

2. The method according to claim 1,
characterized in that the pultruded product is provided, in an extrusion step, unilaterally and/or bilaterally with a layer of thermoplastic material.

3. The method according to claim 1,
characterized in that a layer of filler is applied to the pultruded product in an extrusion step, and then in a further extrusion step, the layer of filler is covered with a layer of thermoplastic material.

4. The method according to claim 1,
characterized in that the provided fabric, knit, nonwoven scrim, plait, hosiery, or nonwoven fabric is wrapped or laid around a cable and then pultruded with the cable.

5. The method according to any one of the preceding claims,
characterized in that the reinforcing material and/or the matrix material has several components.

6. The method according to any one of claims 1-4,
characterized in that the reinforcing material is glass and the matrix material is polyvinyl chloride.

7. The method according to any one of claims 1-4,
characterized in that the reinforcing material is polyethylene terephthalate and the matrix material is polypropylene.

8. The method according to any one of claims 1-4,
characterized in that the reinforcing material is aramide and the matrix material is polyethylene terephthalate.

9. The method according to any one of claims 1-4,
characterized in that the reinforcing material is glass and the matrix material is pOlyethylene terephthalate.

10. The method according to any one of claims 1-4,
characterized in that the reinforcing material is glass and the matrix material is lead.

11. The method according to any one of claims 1-4,
characterized in that the reinforcing material is a mixture of glass and aramide and the matrix material is a mixture of polyethylene terephthalate and Polyamide 66 copolymer.

12. A tube or hose,
characterized in that it has been produced by a method according to any one of the preceding claims.

## Revendications

1. Procédé de fabrication de tubes ou de tuyaux souples à haute résistance en un matériau composite renforcé par fibres, comprenant les opérations consistant à :
- utiliser un matériau de renforcement tissé, tricoté, en nappe, en treillis, à mailles ou non-tissé et un matériau matrice dont la température de fusion est inférieure à celle du matériau de renforcement,
- pultruder le matériau tissé, tricoté, en nappe, en treillis, à mailles ou non-tissé à travers une forme correspondant au produit final souhaité à une température située au dessus de la température de fusion du matériau matrice et en dessous de la température de fusion respectivement de la température de décomposition du matériau de renforcement, et
- refroidir le tube ou tuyau souple obtenu,
caractérisé par les opérations consistant à
- appliquer une couche de matériau de renforcement supplémentaire sur la surface extérieure du tube ou tuyau souple par tressage, tricotage ou enroulement, et
- recouvrir par extrusion la couche supplémentaire appliquée auparavant de matériau de renforcement d'une couche de matériau thermoplastique.

2. Procédé selon la revendication 1,
caractérisé en ce que le produit pultrudé est pourvu lors d'une opération d'extrusion d'un ou des deux côtés d'une couche de matériau thermoplastique.

3. Procédé selon la revendication 1,
caractérisé en ce qu'une couche de matériau inerte est appliquée lors d'une opération d'extrusion sur le produit pultrudé et en ce que la couche de matériau inerte est ensuite revêtue lors d'une autre opération d'extrusion d'une couche de matériau thermoplastique.

4. Procédé selon la revendication 1,
caractérisé en ce que le matériau tissé, tricoté, en nappe, en treillis, à mailles ou non-tissé est enroulé ou posé autour d'un câble et est ensuite pultrudé avec le câble.

5. Procédé selon l'une quelconque des revendications précédentes,
caractérisé en ce que le matériau de renforcement et / ou le matériau matrice présente(nt) plusieurs composants.

6. Procédé selon l'une quelconque des revendications 1 à 4,
caractérisé en ce que le matériau de renforcement est du verre et le matériau matrice est du chlorure de polyvinyle.

7. Procédé selon l'une quelconque des revendications 1 à 4,
caractérisé en ce que le matériau de renforcement est du polytéréphtalate d'éthylène et le matériau matrice est du polypropylène.

8. Procédé selon l'une quelconque des revendications 1 à 4,
caractérisé en ce que le matériau de renforcement est de l'aramide et le matériau matrice est du polytéréphtalate d'éthylène.

9. Procédé selon l'une quelconque des revendications 1 à 4,
caractérisé en ce que le matériau de renforcement est du verre et le matériau matrice est du polytéréphtalate d'éthylène.

10. Procédé selon l'une quelconque des revendications 1 à 4,
caractérisé en ce que le matériau de renforcement est du verre et le matériau matrice est du plomb.

11. Procédé selon l'une quelconque des revendications 1 à 4,
caractérisé en ce que le matériau de renforcement est un mélange de verre et d'aramide et le matériau matrice est un mélange de polytéréphtalate d'éthylène et de copolymère de polyamide-66.

12. Tube ou tuyau souple
caractérisé en ce qu'il a été fabriqué par un procédé selon l'une quelconque des revendications précédentes.
